# FASCICULE DE BREVET EUROPEEN

(11) **EP 0 658 705 B1**
(45) Date de publication et mention de la délivrance du brevet: **27.08.1997**
(21) Numéro de dépôt: 94402860.4
(22) Date de dépôt: 12.12.1994
(51) Int. Cl.: F16H 3/64, B60K 17/16

(54) **Mécanisme réducteur et dispositif de transmission à deux gammes de rapports de vitesses, pour véhicule automobile**
Untersetzungsgetriebe und Kraftübertragung mit zwei Gangstufen für ein Kraftfahrzeug
Speed-reducing mechanism and transmission device with two ranges for a motor vehicle

(30) Priorité: 15.12.1993 FR 9315117
(43) Date de publication de la demande: 21.06.1995
(73) Titulaire: Dangel, Henry, F-68100 Mulhouse (FR)
(72) Inventeur: Dangel, Henry, F-68100 Mulhouse (FR)
(74) Mandataire: Moncheny, Michel

(56) Documents cités:
- EP-A- 0 421 112
- FR-A- 940 256
- FR-A- 1 109 537
- FR-A- 1 162 024
- FR-A- 2 532 708

## Description

La présente invention concerne les mécanismes réducteurs et les dispositifs de transmission pour véhicules automobiles.

Elle concerne notamment des véhicules dits "tous chemins" c'est à dire présentant des capacités de franchissement supérieures à celles des véhicules routiers normaux mais qui peuvent être néanmoins dérivés de véhicules de série. Ces véhicules peuvent comporter deux ou quatre roues motrices, les deux roues motrices supplémentaires pouvant l'être de façon permanente ou sous la commande du conducteur.

On sait que de tels véhicules peuvent parfois être handicapés par un manque de motricité auquel cas il est souhaitable de pouvoir disposer d'une gamme de rapports de vitesses plus courte destinée à compenser ce défaut de motricité. Une solution connue pour pouvoir disposer de cette deuxième gamme de vitesses consiste à prévoir une boîte de vitesses spécifique, équipée d'un mécanisme réducteur qui permet d'établir dans cette boîte de vitesses les deux gammes de rapports souhaitées.

Une telle solution est à la fois compliquée et chère : en effet, elle implique de pouvoir adapter sur un même véhicule soit une boîte classique, soit une boîte spéciale n'ayant pas le même encombrement. De plus, étant donné que dans un groupe motopropulseur et notamment un groupe motopropulseur disposé transversalement par rapport à la direction longitudinale du véhicule, le carter de la boîte de vitesses est en général intégré au bloc moteur et au carter du différentiel, le fait de devoir disposer de deux boîtes de vitesses différentes a une incidence sur les éléments adjacents du bloc moteur, ce qui est un facteur d'augmentation du coût.

Enfin, si le réducteur est disposé à l'entrée de la boîte de vitesses, il est nécessaire de surdimensionner celle-ci pour pouvoir transmettre des couples plus élevés lorsque la gamme courte est choisie, ce qui augmente d'autant le coût du dispositif.

Le document FR-A-2532708 décrit une transmission automatique pour véhicule à moteur transversal, comprenant un train épicycloïdal simple, coaxial au différentiel et dont la couronne à dentures interne et externe est supportée à rotation sur une portée cylindrique du boîtier de différentiel, lui-même fixé au porte-satellites.

L'objectif qui est ici fixé est de proposer un mécanisme réducteur et un dispositif de transmission qui permettent de disposer de deux gammes de rapport de vitesses sans modification de la boîte de vitesses, dans un encombrement réduit et moyennant un coût le plus faible possible.

A cet effet, l'invention a pour objet un mécanisme réducteur du type à train planétaire, comprenant un carter, un porte-satellites monté rotatif dans ce carter, une couronne à dentures externe et interne, un pignon planétaire et des pignons satellites, engrenant avec le planétaire et avec la denture interne de la couronne, le porte-satellites délimitant au moins une portée cylindrique, qui supporte à rotation la couronne, caractérisé en ce que le porte-satellites comprend un premier flasque radial délimitant une portée cylindrique, et un deuxième flasque radial, parallèle au premier, qui délimite avec lui un espace dans lequel sont reçus les pignons satellites du mécanisme réducteur et qui délimite aussi une portée cylindrique située dans le prolongement de la portée cylindrique dudit premier flasque radial, ces deux portées assurant le guidage en rotation de la couronne.

Suivant d'autres caractéristiques :
- le deuxième flasque radial est fixé sur le premier par des goujons, des parties en saillie déterminant la largeur de l'espace libre ménagé entre les deux faces en regard des deux flasques ;
- la couronne a une section transversale en forme de T dont la branche verticale est reçue et guidée latéralement dans l'intervalle entre les deux flasques et dont les parties inférieures des deux branches horizontales coopèrent avec les portées cylindriques des deux flasques ;
- le porte-satellites comprend une partie axiale délimitant une portée cylindrique qui supporte à rotation le pignon planétaire ;
- il est prévu des moyens permettant de placer le mécanisme réducteur dans l'un ou l'autre de deux états, comprenant un manchon balladeur, monté coulissant entre deux positions, une première position dans laquelle il rend solidaires deux éléments du mécanisme réducteur à train planétaire, bloquant ainsi ce dernier, et une deuxième position dans laquelle il libère ces deux éléments et bloque l'un d'entre eux par rapport au carter ;
- le manchon balladeur comporte des cannelures internes toujours en prise avec des cannelures externes correspondantes prévues sur un prolongement axial du planétaire du mécanisme réducteur et au moins une denture externe pouvant être amenée en prise, sélectivement, soit avec une denture interne prévue sur le porte-satellites du mécanisme réducteur, soit avec une denture interne prévue sur une pièce solidaire du carter;
- la denture interne prévue sur le porte-satellites est ménagée sur le deuxième flasque fixé sur le flasque radial du porte-satellites.

L'invention a également pour objet un dispositif de transmission comprenant une boîte de vitesses et au moins un différentiel logés dans au moins un carter, la boîte de vitesses comportant un pignon de sortie et le différentiel comportant un boîtier qui constitue son organe d'entrée et qui est relié à une couronne en prise avec le pignon de sortie de la boîte, caractérisé en ce qu'un mécanisme réducteur à train planétaire tel que défini ci-dessus est interposé entre la couronne et le boîtier du différentiel, des moyens étant prévus pour pouvoir placer ce mécanisme réducteur dans l'un ou l'autre de deux états : un premier état dans lequel il est bloqué et n'introduit aucune réduction de vitesse et un deuxième état dans lequel il fonctionne en réducteur de vitesse.

L'invention va être décrite plus en détail ci-dessous en se référant aux dessins annexés, donnés uniquement à titre d'exemples et sur lesquels :
La Figure 1 est une vue en coupe suivant la ligne 1-1 de la Figure 3 d'une partie d'un dispositif de transmission selon l'invention ;
La Figure 2 est une vue analogue à celle de la Figure 1 montrant le dispositif dans une deuxième position d'utilisation ;
La Figure 3 est une vue en élévation latérale du réducteur, le boîtier de différentiel étant omis ; et
La Figure 4 est une vue en coupe d'une variante d'utilisation d'un mécanisme réducteur selon l'invention.

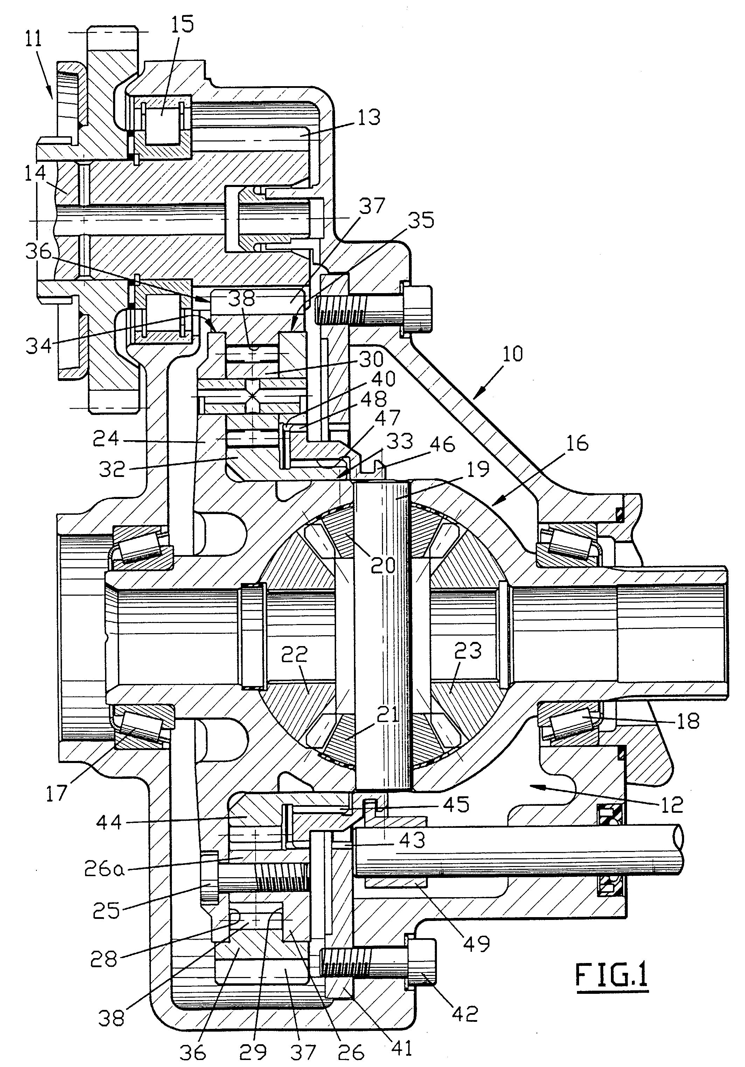

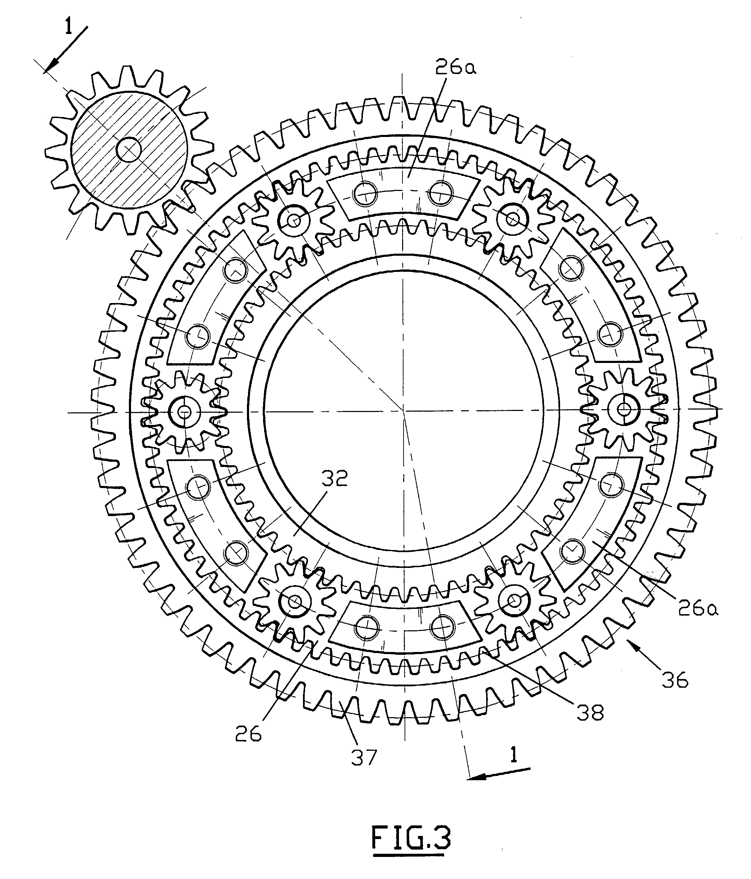

On a représenté aux Figures 1 à 3 une partie d'un groupe motopropulseur de véhicule automobile, qui est disposé transversalement par rapport à la direction longitudinale de ce véhicule. Ne sont représentées que les parties du dispositif utiles à la compréhension de l'invention. C'est ainsi que le moteur proprement dit et l'essentiel de la boîte de vitesses n'ont pas été représentés sur ces dessins.

On voit sur la Figure 1 une partie 10 du carter de la boîte de vitesses 11 et du différentiel 12, ainsi que le pignon 13 de sortie de la boîte de vitesses. L'arbre 14 dont est solidaire ce pignon de sortie est monté rotatif dans le carter par des roulements tels que le roulement 15.

Le différentiel 12 est disposé dans son carter et comporte un boîtier 16 supporté à rotation dans le carter par deux roulements coniques 17 et 18. Ce différentiel comprend par ailleurs, de façon connue, un porte-satellites 19 et des satellites 20, 21 engrenant avec des pignons planétaires 22 et 23 destinés à être reliés à des arbres de transmission non représentés aux dessins et qui sont destinés à entraîner les deux roues avant du véhicule.

On n'a pas davantage représenté aux dessins des moyens permettant d'entraîner à partir du boîtier de différentiel un essieu arrière moteur du véhicule.

Le boîtier 16 de différentiel comporte un flasque radial 24 auquel est fixé, par des goujons 25, un deuxième flasque annulaire 26. Des parties en saillie 26^{a} déterminent la largeur de l'espace libre ménagé entre les deux faces en regard 28, 29 des flasques 24, 26 pour recevoir des pignons satellites 30 montés rotatifs sur des axes creux 31 et un planétaire 32 qui engrène avec les pignons satellites et qui est monté rotatif sur une portée cylindrique 33 du boîtier du différentiel. Les satellites 30 peuvent éventuellement être montés sur aiguilles.

Par ailleurs, les deux flasques 24 et 26 délimitent des surfaces cylindriques de portée, alignées 34 et 35 sur lesquelles est guidée une couronne 36.

Cette couronne comporte une denture externe 37 qui est en prise avec le pignon de sortie 13 de la boîte de vitesses et une denture interne 38 qui coopère avec les pignons satellites 30.

La couronne a une section en forme de T dont la branche verticale portant la denture interne est reçue et guidée latéralement dans l'intervalle entre les deux faces en regard des flasques 24, 26 et dont les branches horizontales délimitent d'un côté des portées concaves reposant sur les portées 34, 35 et, de l'autre côté la denture externe 37.

L'ensemble formé par le boîtier de différentiel 16 faisant office de porte-satellites, le planétaire 32, les satellites 30 et la couronne 36 constitue un train planétaire qui occupe un volume habituellement inutilisé, entre le différentiel et le pignon de sortie de la boîte de vitesses et qui permet d'obtenir les deux gammes de vitesse souhaitées.

A cet effet, le dispositif est complété par des moyens permettant de bloquer à volonté le train planétaire que l'on vient de décrire. Ces moyens comprennent une denture interne 40 ménagée sur la périphérie interne du flasque 26, une plaque 41 qui est fixée par des goujons 42 au carter de différentiel et qui comporte sur sa périphérie interne une denture 43 identique à celle prévue sur le flasque 26.

Le planétaire 32 est par ailleurs prolongé par un tronçon d'arbre creux 44 portant des cannelures externes 45.

Un manchon balladeur 46, cannelé intérieurement en 47 est monté coulissant sur les cannelures 45 et comporte d'une part une denture externe 48 susceptible de coopérer avec l'une ou l'autre des deux dentures 40 et 43. Ce manchon balladeur est actionné au moyen d'une fourchette 49 qui peut être déplacée par l'utilisateur lorsque le véhicule est à l'arrêt.

Le fonctionnement d'un tel dispositif est le suivant : lorsque le manchon balladeur 46 occupe la position représentée sur la Figure 1, il solidarise le planétaire 32 et le porte-satellites 24, 26 du train interposé entre la couronne 36 et le différentiel 12. Cela a pour effet de bloquer ce train planétaire de sorte que la couronne 36 est rendue solidaire du boîtier 16 de différentiel et que le rapport établi dans la boîte de vitesses n'est pas modifié entre la sortie de la boîte et l'entrée du différentiel. On établit ainsi dans la transmission une gamme longue de rapports de vitesses.

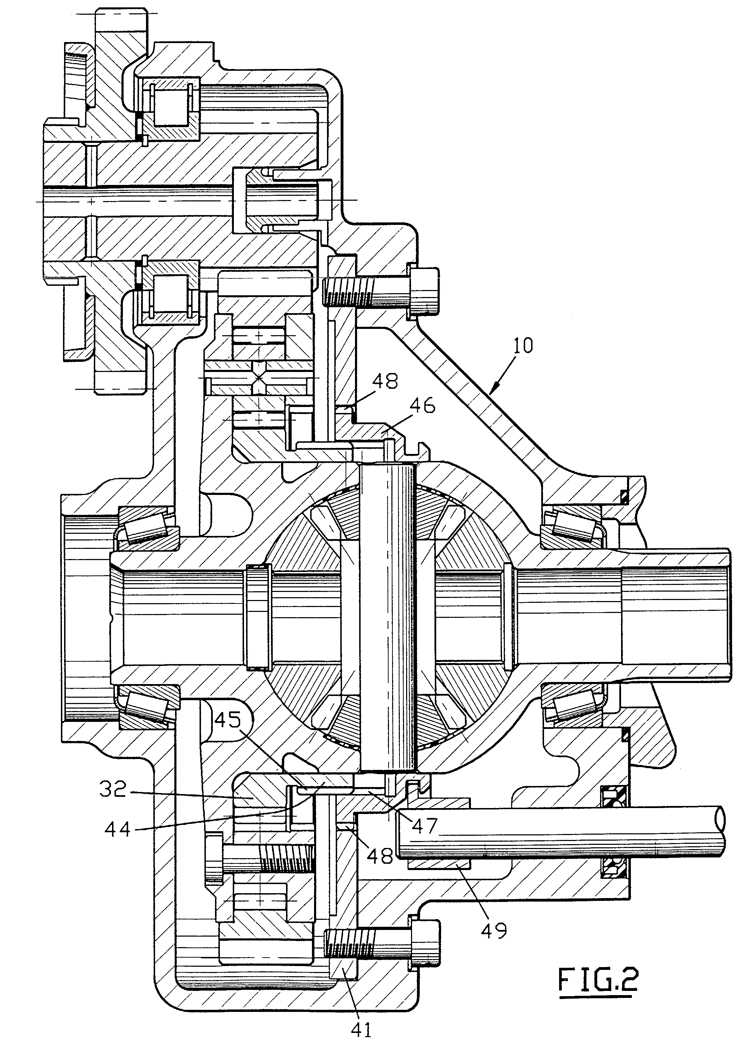

Pour pouvoir disposer d'une motricité plus importante, l'utilisateur amène le balladeur 46 dans la position représentée à la Figure 2, position dans laquelle ce balladeur rend le planétaire 32 solidaire de la plaque 41 et par conséquent du carter 10. Le planétaire 32 constitue ainsi un organe de réaction, le porte-satellites 24, 26 tourne dans le même sens que la couronne, mais moins vite et le train planétaire intermédiaire introduit un coefficient de réduction de vitesse entre la sortie de la boîte et le différentiel, permettant ainsi de disposer d'une gamme plus courte de rapports de vitesses.

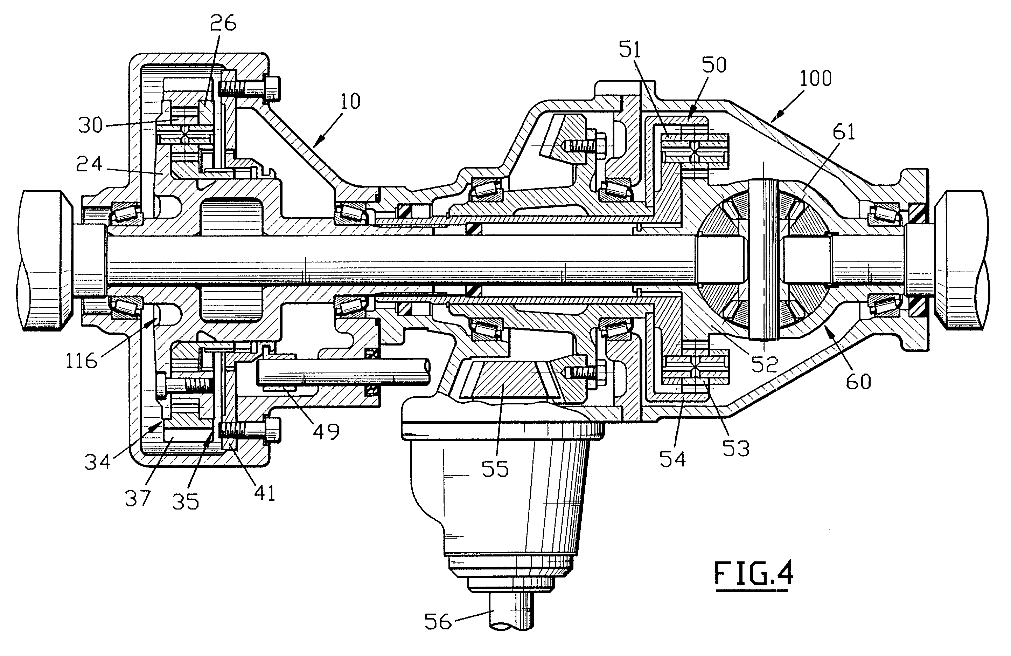

On a représenté sur la figure 4 une transmission pour véhicule à quatre roues motrices comprenant, dans un carter 100, un différentiel central 50 relié à la sortie de la boîte de vitesse, non représentée, par un mécanisme réducteur suivant l'invention, tel que décrit à propos des figures 1 à 3. L'organe d'entrée de ce différentiel central, du type à train épicycloïdal, est constitué par son porte-satellites 51 qui est relié de façon à en être solidaire en rotation, au porte-satellites 116 du mécanisme réducteur. Les différents éléments de ce dernier sont désignés par les mêmes numéros de référence que sur les figures 1 à 3.

Le différentiel central comporte par ailleurs un planétaire 52 qui est solidaire du boîtier d'un différentiel 60 d'entraînement des roues avant du véhicule, des satellites 53 et une couronne 54 qui entraîne par l'intermédiaire d'un renvoi conique 55, un arbre longitudinal de transmission 56 relié au différentiel des roues arrière (non représenté).

On ne décrira pas davantage ce dispositif dont l'originalité réside principalement dans l'utilisation d'un mécanisme réducteur suivant l'invention logé dans le carter 10.

Dans l'agencement selon l'invention, la couronne 36 est guidée sur des portées lisses, sans qu'il soit nécessaire de prévoir des roulements supplémentaires, ce qui constitue une solution simple et peu encombrante. A cet égard, les surfaces de portée font de préférence l'objet d'un traitement électrolytique, par exemple de sulfuration ou de sursulfuration, ou de tout autre type de traitement approprié pour leur donner les caractéristiques nécessaires d'état de surface et de résistance.

On notera pour les deux modes de réalisation que la présence d'une gamme longue et d'une gamme courte est obtenue par des moyens simples et peu encombrants puisque le train réducteur supplémentaire est disposé dans l'encombrement normal du groupe motopropulseur, sans qu'il soit nécessaire de modifier sensiblement les carters. L'adjonction de la plaque 41 ne pose pas de problème particulier.

Le fait de disposer le train réducteur en aval de la boîte de vitesses permet de ne pas surdimensionner cette dernière qui demeure inchangée par rapport à sa configuration habituelle.

Le dispositif proposé constitue donc une solution particulièrement simple et peu onéreuse, par rapport aux solutions déjà connues et qui peut être utilisée dans différentes configurations : véhicule à deux ou quatre roues motrices, en association avec un différentiel avant ou avec un différentiel central ou interponts.

## Revendications

1. Mécanisme réducteur du type à train planétaire, comprenant un carter (10), un porte-satellites (16;116) monté rotatif dans ce carter, une couronne (36) à dentures externe (37) et interne (38), un pignon planétaire (32) et des pignons satellites (30), engrenant avec le planétaire et avec la denture interne (38) de la couronne, le porte-satellites (16;116) délimitant au moins une portée cylindrique (34, 35), qui supporte à rotation la couronne (36), caractérisé en ce que le porte-satellites (16;116) comprend un premier flasque radial (24) délimitant une portée cylindrique (34), et un deuxième flasque radial (26), parallèle au premier, qui délimite avec lui un espace dans lequel sont reçus les pignons satellites (30) du mécanisme réducteur et qui délimite aussi une portée cylindrique (35) située dans le prolongement de la portée cylindrique (34) dudit premier flasque radial (24), ces deux portées (34, 35) assurant le guidage en rotation de la couronne (36).

2. Mécanisme réducteur suivant la revendication 1, caractérisé en ce que le deuxième flasque radial (26) est fixé sur le premier par des goujons (25), des parties en saillie (26^{a}) déterminant la largeur de l'espace libre ménagé entre les deux faces en regard (28, 29) des deux flasques.

3. Mécanisme réducteur suivant la revendication 1 ou 2, caractérisé en ce que la couronne a une section transversale en forme de T dont la branche verticale est reçue et guidée latéralement dans l'intervalle entre les deux flasques et dont les parties inférieures des deux branches horizontales coopèrent avec les portées cylindriques (34, 35) des deux flasques (24, 26).

4. Mécanisme réducteur suivant l'une quelconque des revendications 1 à 3, caractérisé en ce que le porte-satellites (16;116) comprend une partie axiale (33) délimitant une portée cylindrique qui supporte à rotation le pignon planétaire (32).

5. Mécanisme réducteur suivant la revendication 1, caractérisé en ce qu'il comprend des moyens permettant de le placer dans l'un ou l'autre de deux états, ces moyens comportant un manchon balladeur (46), monté coulissant entre deux positions, une première position dans laquelle il rend solidaires deux éléments (24, 26 ; 32) du mécanisme réducteur à train planétaire, bloquant ainsi ce dernier, et une deuxième position dans laquelle il libère ces deux éléments et bloque l'un (32) d'entre eux par rapport au carter.

6. Mécanisme réducteur suivant la revendication 5, caractérisé en ce que le manchon balladeur (46) comporte des cannelures internes (47) toujours en prise avec des cannelures externes correspondantes (45) prévues sur un prolongement axial (44) du planétaire (32) du mécanisme réducteur et au moins une denture externe (48) pouvant être amenée en prise, sélectivement, soit avec une denture interne (40) prévue sur le porte-satellites (24, 26) du mécanisme réducteur, soit avec une denture interne (43) prévue sur une pièce (41) solidaire du carter.

7. Mécanisme réducteur suivant la revendication 6, caractérisé en ce que la denture interne (40) prévue sur le porte-satellites est ménagée sur le deuxième flasque (26) fixé au flasque radial (24) du porte-satellites.

8. Dispositif de transmission comprenant une boîte de vitesses (11) et au moins un différentiel (12) logés dans au moins un carter (10), la boîte de vitesses comportant un pignon de sortie (13) et le différentiel comportant un boîtier (16) qui constitue son organe d'entrée et qui est relié à une couronne (36) en prise avec le pignon (13) de sortie de la boîte, caractérisé en ce qu'un mécanisme réducteur à train planétaire tel que défini dans l'une quelconque des revendications 1 à 7, est interposé entre la couronne (36) et le boîtier (16) du différentiel, ce boîtier (16) constituant le porte-satellites du mécanisme réducteur, des moyens (46) étant prévus pour pouvoir placer ce mécanisme réducteur dans l'un ou l'autre de deux états : un premier état dans lequel il est bloqué et n'introduit aucune réduction de vitesse et un deuxième état dans lequel il fonctionne en réducteur de vitesse.

## Patentansprüche

1. Untersetzungsgetriebe vom Typ Umlaufgetriebe, mit einem Gehäuse (10), einem Satellitenträger (16; 116), der drehbar in diesem Gehäuse angeordnet ist, einem Kranz (36) mit Außen- (37) und Innenzahnung (38), einem Planetenrad (32) und Satellitenrädern (30), die in das Zentralrad und in die Innenzahnung (38) des Kranzes eingreifen, wobei der Satellitenträger (16; 116) zylindrische Fläche (34, 35) begrenzt, die den Kranz (36) drehbar hält, dadurch gekennzeichnet, daß der Satellitenträger (16; 116) einen ersten radialen Flansch (24), der eine zylindrische Fläche (34) begrenzt, und einen zweiten radialen Flansch (26), parallel zu dem ersten, aufweist, der mit ihm einen Raum begrenzt, in dem die Satellitenträger (30) des Untersetzungsgetriebes aufgenommen sind, und der auch eine zylindrische Fläche (35) begrenzt, die in der Verlängerung der zylindrischen Fläche (34) des ersten radialen Flansches (24) angeordnet ist, wobei diese beiden Flächen die Drehführung des Kranzes (36) gewährleisten.

2. Untersetzungsgetriebe nach Anspruch 1, dadurch gekennzeichnet, daß der zweite radiale Flansch (26) auf dem ersten durch Stiftbolzen (25) befestigt ist, wobei hervorstehende Teile (26") die Breite des freien Raumes bestimmen, der zwischen den beiden gegenüberstehenden Flächen (28, 29) der beiden Flansche angeordnet ist.

3. Untersetzungsgetriebe nach Anspruch 1 oder 2, dadurch gekennzeichnet, daß der Kranz einen Querschnitt in T-Form hat, dessen vertikales Bein in dem Zwischenraum zwischen den beiden Flanschen aufgenommen und seitlich geführt ist und dessen untere Abschnitte der beiden horizontalen Beine mit den zylindrischen Flächen (34, 35) der beiden Flansche (24, 36) zusammenwirkt.

4. Untersetzungsgetriebe nach einem der Ansprüche 1 bis 3, dadurch gekennzeichnet, daß der Satellitenträger (16; 116) einen axialen Teil (33) aufweist, der eine zylindrische Fläche begrenzt, welche das Planetenrad (32) drehbar hält.

5. Untersetzungsgetriebe nach Anspruch 1, dadurch gekennzeichnet, daß es Mittel aufweist, die es ermöglichen, es in den einen oder anderen von zwei Zuständen zu bringen, wobei diese Mittel eine Reibmuffe (46) aufweisen, die gleitbar zwischen zwei Positionen angebracht ist, einer ersten Position, in der sie zwei Elemente (24, 26; 32) des Umlauf-Untersetzungsgetriebes fest zusammenbringt, um somit dieses letztere zu blockieren, und einer zweiten Position, in der sie diese beiden Elemente freigibt und eines (32) von ihnen in bezug auf das Gehäuse blockiert.

6. Untersetzungsgetriebe nach Anspruch 5, dadurch gekennzeichnet, daß die Reibmuffe (46) innere Rillen (47), die im ständigen Eingriff mit entsprechenden äußeren Rillen (45) sind, die auf einer axialen Verlängerung (44) des Zentralrades (32) des Untersetzungsgetriebes vorgesehen sind, und wenigstens eine Außenzahnung (48) aufweist, die wahlweise entweder mit einer Innenzahnung (40), die aut dem Satellitenträger (24, 26) des Untersetzungsgetriebes vorgesehen ist, oder mit einer Innenzahnung (41), die fest am Gehäuse ausgebildet ist, in Eingriff gebracht werden kann.

7. Untersetzungsgetriebe nach Anspruch 6, dadurch gekennzeichnet, daß die Innenzahnung (40), die auf dem Satellitenträger vorgesehen ist, auf dem zweiten Flansch (26) angebracht ist, der am radialen Flansch (24) des Satellitenträgers befestigt ist.

8. Kraftübertragungsvorrichtung, mit einem Schaltgetriebe (11) und wenigstens einem Differential (12), die in wenigstens einem Gehäuse (10) untergebracht sind, wobei das Schaltgetriebe ein Ausgangszahnrad (13) aufweist und das Differential eine Gehäuseschale (16) aufweist, das sein Eingangselement bildet und das mit einem Kranz (36) im Eingriff mit dem Ausgangszahnrad (13) des Getriebes verbunden ist, dadurch gekennzeichnet, daß ein Umlauf-Untersetzungsgetriebe, wie es in einem der Ansprüche 1 bis 7 definiert ist, zwischen den Kranz (36) und die Gehäuseschale (16) des Differentials geschaltet ist, wobei diese Gehäuseschale (16) den Satellitenträger des Untersetzungsgetriebes bildet, wobei Mittel (46) vorgesehen sind, um dieses Untersetzungsgetriebe in den einen oder anderen von zwei Zuständen bringen zu können: einen ersten Zustand, in dem es blockiert ist und keine Drehzahlminderung einführt, und einen zweiten Zustand, in dem es als Drehzahlminderer arbeitet.

## Claims

1. A speed-reducing mechanism of planetary gear type, comprising a housing (10), a planet wheel carrier (16; 116) mounted rotatably in the housing, an annulus (36) with external (37) and internal (38) teeth, a sun wheel (32) and planet wheels (30) in mesh with the sun wheel and with the internal teeth (38) of the annulus, the planet wheel carrier (16; 116) defining at least one cylindrical bearing (34, 35), which supports the annulus (36) rotatably, characterized in that the planet wheel carrier (16; 116) has a first radial flange (24) defining one cylindrical bearing (34) and a second radial flange (26) parallel to the first and which defines therewith a space in which the planet wheels (30) of the reducing mechanism are received and which further defines a cylindrical bearing (35) located in the extension of the cylindrical bearing (34) of the said first radial flange (24), the two bearings (34, 35) providing the guiding for rotation of the annulus (36).

2. A speed-reducing mechanism according to claim 1, characterized in that the second radial flange (26) is fixed to the first by studs (25), of which projecting parts (26^{a}) determine the width of the free space formed between the two opposed faces (28, 29) of the two flanges.

3. A speed-reducing mechanism according to claim 1 or 2, characterized in that the annulus has a T-shaped transverse section, of which the vertical limb is received in and guided laterally in the space between the two flanges and of which the under parts of the two horizontal limbs cooperate with the cylindrical bearings (35, 35) of the two flanges (24, 26).

4. A speed-reducing mechanism according to any of claims 1 to 3, characterized in that the planet wheel carrier (16; 116) comprises an axial part (33) defining a cylindrical bearing which rotatably supports the sun wheel (32).

5. A speed-reducing mechanism according to claim 1, characterized in that it comprises means allowing it to be set in one or the other of two states, these means comprising a sliding sleeve (46) mounted to slide between two position, namely a first position in which it renders two elements (24, 26; 32) of the planetary gear speed-reducing mechanism solid so as to lock up the mechanism, and a second position in which it frees these two elements and locks one (32) of them relative to the housing.

6. A speed-reducing mechanism according to claim 5, characterized in that the sliding sleeve (46) has internal splines (47) in constant engagement with corresponding external splines (45) provided on an axial extension (44) of the sun wheel (32) of the speed-reducing mechanism and at least one external toothing (48) which can be placed selectively in engagement either with an internal toothing (40) provided on the planet wheel carrier (24, 26) of the speed-reducing mechanism or with an internal toothing (43) provided on a part (41) fixed to the housing.

7. A speed-reducing mechanism according to claim 6, characterized in that the internal toothing (40) provided on the planet wheel carrier is formed on the second flange (26) fixed to the radial flange (24) of the planet wheel carrier.

8. A transmission arrangement comprising a gearbox (11) and at least one differential (12) fitted in at least one housing (10), the gearbox comprising an output pinion (13) and the differential comprising a casing (16) which forms its input member and which is coulpled to an annulus (36) in engagement with the output pinion (13) of the gearbox, characterized in that a speed-reducing mechanism of planetary gear type as defined in any of claims 1 to 7 is interposed between the annulus (36) and the casing (16) of the differential, this casing (16) forming the planet wheel carrier of the speed-reducing mechanism, means (46) being provided to enable the speed-reducing mechanism to be placed in one or the other of two states: a first state in which it is locked up and does not effect any reduction in speed and a second state in which it functions to reduce the speed.
